# EUROPÄISCHE PATENTSCHRIFT

(11) **EP 3 242 379 B1**
(45) Veröffentlichungstag und Bekanntmachung des Hinweises auf die Patenterteilung: **17.06.2020**
(21) Anmeldenummer: 17168182.8
(22) Anmeldetag: 26.04.2017
(51) Int. Cl.: H02K 5/20, H02K 9/04, H02K 9/16

(54) **MOTORAUFNAHMEVORRICHTUNG**
MOTOR HOLDER DEVICE
COMPARTIMENT MOTEUR

(30) Priorität: 03.05.2016 DE 102016108233
(43) Veröffentlichungstag der Anmeldung: 08.11.2017
(73) Patentinhaber: ebm-papst Mulfingen GmbH & Co. KG, 74673 Mulfingen (DE)
(72) Erfinder: HELI, Thomas, 74595 Langenburg (DE); GÜNTHER, Jörg, 74677 Dörzbach (DE); SPAZIERER, Tim, 74676 Niedernhall (DE); SCHLER, Christian, 74677 Dörzbach (DE)
(74) Vertreter: Staeger & Sperling Partnerschaftsgesellschaft mbB

(56) Entgegenhaltungen:
- CN-U- 204 669 164
- DE-A1-102014 205 870
- DE-U1-202015 101 683
- JP-U- S5 785 856
- US-A1- 2004 051 412

## Beschreibung

Die Erfindung betrifft eine Motoraufnahmevorrichtung sowie einen Elektromotor, der in der Motoraufnahmevorrichtung aufgenommen ist.

Elektronisch kommutierte Elektromotoren in SAL-Bauweise werden häufig mit integrierter Elektronik an eine Motoraufnahme bzw. ein Gehäuse verbaut, die bzw. das ebenfalls zusätzliche Bauteile oder eine externe Elektronik des Elektromotors aufnehmen kann. Hierbei werden die wärmeabführenden Bauteile eingeschlossen, so dass die Wärmeabgabe an die Umgebung eingeschränkt ist.

Aus dem Stand der Technik ist bekannt, an Elektromotoren Kühllaufräder einzusetzen, um Kühlluftströme zu erzeugen. Diesbezüglich wird zum Beispiel auf die Veröffentlichungen EP 1 419 568 A1 oder DE 20 2015 10 1 83 U verwiesen. Weitere, in der Technik bekannte Lösungen werden in den Druckschriften DE 10 2014 205 870 A1, US 2004/051412 A1, CN 204 669 164 U und JP S57 85856 U offenbart.

Für geschlossene Motoraufnahmevorrichtungen stellt sich jedoch das Problem der Erzeugung einer geeigneten, insbesondere zirkulierenden Luftströmung ins Innere, entlang der zu kühlenden Bauteile und wieder nach außen.

Der Erfindung liegt deshalb die Aufgabe zugrunde, eine Motoraufnahmevorrichtung bereitzustellen, die eine gute Wärmeabfuhr bietet. Ferner ist Aufgabe der Erfindung, eine entsprechende Kombination aus Elektromotor und Motoraufnahmevorrichtung bereit zu stellen.

Diese Aufgabe wird durch die Merkmalskombination gemäß der Ansprüche 1 und 9 gelöst.

Eine erfindungsgemäße Motoraufnahmevorrichtung ist ausgebildet zur Aufnahme eines Elektromotors mit einem in radialer Richtung zur Motoraufnahmevorrichtung weisenden und von dem Elektromotor antreibbaren Kühllaufrad. Die Motoraufnahmevorrichtung weist eine Gehäusewand mit einem umlaufenden Druckraum auf, der ausbildet ist, sich radial an das Kühllaufrad des Elektromotors anzuschließen, wobei der Druckraum in einer axialen Draufsicht asymmetrisch ausgebildet ist. An der den Druckraum begrenzenden Gehäusewand sind zudem in Umfangsrichtung voneinander beabstandet eine Ansaugöffnung und eine Ausblasöffnung vorgesehen.

Das Kühllaufrad erzeugt im Betrieb des Elektromotors eine Kühlluftströmung, wobei Luft von außen über die Ansaugöffnung ins Innere der Motoraufnahmevorrichtung gesaugt und über zu kühlende Teile des Elektromotors und die Elektronik geführt wird. Die heißen Bauteile geben dabei Wärme an den Kühlluftstrom ab. Durch die Kühlluftströmung entsteht im Inneren der Motoraufnahmevorrichtung ein Überdruck, der über die Ausblasöffnung ausgeglichen wird. Die Motoraufnahmevorrichtung ist im Übrigen geschlossen ausgebildet. Die vordefinierte Kühlluftführung von Ansaugöffnung zu Ausblasöffnung wird durch die asymmetrische Ausbildung des Druckraums realisiert. Der Druckaufbau durch das Kühllaufrad ist ebenfalls asymmetrisch, wobei in einem Bereich mit größerem radialen Kopfspalt zwischen Kühllaufrad und Gehäusewandung ein höherer Förderdruck erzeugt wird als in einem Bereich mit geringerem Kopfspaltmaß. Die geförderte Kühlluft wird konstruktionsbedingt über die Ausblasöffnungen in einem Bereich der Gehäusewand mit vergleichsweise größerem Kopfspaltmaß ausgeblasen. Auf diese Weise entsteht zwangsweise ein zirkulierender Kühlluftstrom durch das Innere der Motoraufnahmevorrichtung.

Auch ist günstig, dass ein Teil des Kühlluftstroms über den Elektromotor selbst geführt werden kann, wobei der Kühlluftstrom durch den Motorluftspalt zwischen Rotor und Stator strömt und durch Bohrungen im Rotor in die Motoraufnahmevorrichtung entweichen kann. Hierdurch werden die Motorwicklungen zusätzlich gekühlt.

Die Asymmetrie des Druckraums ist in einem Ausführungsbeispiel durch einen zwischen der Gehäusewand und der radialen Stirnseite des Kühllaufrads vorgesehen radialen Kopfspalt realisierbar, dessen Größe in radialer Richtung entlang der Umfangsrichtung gesehen unkonstant gehalten ist. Dabei sind die asymmetrische Form des Druckraums sowie die Kopfspaltgröße über den Innendurchmesser der Gehäusewandung einstellbar.

In einer für die Strömungsführung vorteilhaften Ausführung ist vorgesehen, dass die Ansaugöffnung an der Gehäusewand in einem Bereich geringeren Durchmessers ausgebildet ist als die Ausblasöffnung.

In einem Ausführungsbeispiel wird die asymmetrische Form des Druckraums dadurch erreicht, dass an der den Druckraum begrenzenden Gehäusewand mindestens eine in Umfangsrichtung lokal beschränkte radiale Ausbuchtung ausgebildet ist. Dabei ist bevorzugt, dass sich die radiale Ausbuchtung in Umfangsrichtung über 20 - 60 GRAD, weiter bevorzugt 30-45 GRAD erstreckt.

Bei diesem Ausführungsbeispiel ist günstig, dass die Ausblasöffnung in der mindestens einen Ausbuchtung und die Ansaugöffnung in einem Bereich außerhalb der Ausbuchtung ausgebildet sind. Die Ausbuchtung vergrößert den Kopfspalt und mithin den Druckraum, so dass die Strömungsführung von der Ansaugöffnung zur Ausblasöffnung in der Ausbuchtung gezwungen wird.

Die Motoraufnahmevorrichtung ist ferner geschlossen ausgebildet und umkapselt den Elektromotor vollständig.

Das Zusammenwirken des Kühllaufrads mit der Gehäusewandung der Motoraufnahmevorrichtung ist in einer Ausführung vorteilhaft, bei der der Druckraum eine Axialerstreckung aufweist, die größer oder gleich einer axialen Höhe des Kühllaufrads ist.

Zur Vermeidung von Wassereintritt bei der Motoraufnahmevorrichtung wird in einer günstigen Ausführung vorgesehen, dass nur die Ansaugöffnung oder sowohl die Ansaugöffnung als auch die Ausblasöffnung an der Gehäusewand in axialer Richtung weisend ausgebildet sind. Dabei lässt sich eine Einbaurichtung definieren, so dass die Öffnungen in Schwerkraftrichtung zeigen.

Ferner umfasst die Erfindung einen Elektromotor aufgenommen in einer Motoraufnahmevorrichtung mit den vorstehend beschriebenen Merkmalen, wobei ein Verhältnis des maximalen Kopfspalts Smax zwischen dem Kühllaufrad und der Gehäusewand zu dem minimalen Kopfspalt Smin größer als 1,5 ist, so dass gilt Smax/Smin > 1,5.

Der Kopfspalt wird in einer vorteilhaften Ausführung über einen vorbestimmten Umfangsabschnitt, insbesondere über 180 GRAD, konstant gehalten. In diesem Bereich entspricht er einem Nennkopfspalt Snenn, der in einer axialen Draufsicht zwischen dem Kühllaufrad und der Gehäusewand eine Nennkopfspaltfläche A1 bildet. Ein weiterer Abschnitt mit gegenüber dem Nennkopfspalt Snenn vergrößerten Kopfspalt bildet in einer axialen Draufsicht zwischen dem Kühllaufrad und der Gehäusewand eine vergrößerte Kopfspaltfläche A2, wobei als vorteilhaftes Verhältnis gilt A2/A1 > 1,1. Auch wird vorgesehen, dass die Ausblasöffnung in einem Bereich an der Gehäusewand ausgebildet ist, in dem der Kopfspalt größer ist als der Nennkopfspalt, um den asymmetrischen Druckaufbau zu gewährleisten.

Ferner ist eine Ausführung vorteilhaft, bei der die Ansaugöffnung an der Gehäusewand in axialer Richtung unmittelbar an das Kühllaufrad angrenzend ausgebildet ist. Insbesondere liegt die Ansaugöffnung auf der in axialer Schwerkraftrichtung gesehen Seite unterhalb des Kühllaufrads, so dass die Luft axial von unten angesaugt wird. Die Wandung der Motoraufnahmevorrichtung kann hierfür auch lokal im Durchmesser aufgedickt sein.

Das Kühllaufrad wird in einer kostengünstigen Ausführungsvariante nachrüstbar und formschlüssig auf den Rotor aufgeklipst. Hierzu greifen Rastnocken in eine Nut am Rotor ein. Ferner wird in einer Ausführung eine zusätzliche Verdrehsicherung des Kühllaufrads vorgesehen, indem Zapfen am Kühlrad in Aussparungen am Rotor eingreifen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine seitliche Teilschnittansicht einer Motoraufnahmevorrichtung mit darin aufgenommenem Elektromotor,
- Fig. 2: eine seitliche Schnittansicht zu Figur 1 mit Darstellung von Kühlluftströmen,
- Fig. 3: eine axiale Schnittansicht der Ausführung gemäß Fig. 1.

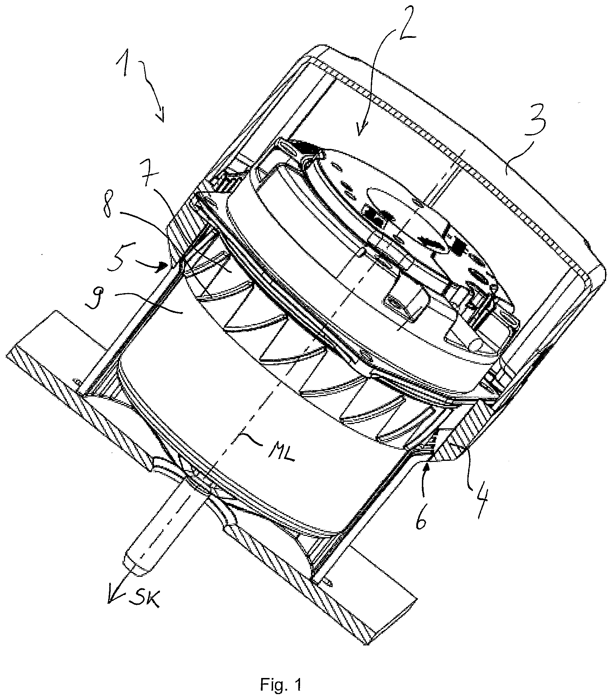

Die Figuren 1 bis 3 zeigen ein Ausführungsbeispiel der Erfindungen, wobei in einer Motoraufnahmevorrichtung 1 ein Elektromotor 2 eingesetzt ist. Die gezeigte Ausführung kann auch als eine Einheit verstanden werden. Die Motoraufnahmevorrichtung 1 ist mehrteilig ausgebildet und umfasst einen Deckel 3, der an einer Gehäusewand 4 befestigt ist. Der Elektromotor 2 ist über einen Flansch an der Motoraufnahmevorrichtung 1 aufgenommen und in ihr vollständig gekapselt. Der Deckel 3 umgibt im Wesentlichen die Motorelektronik, die sich axial an den Deckel 3 anschließende Gehäusewand 4 grenzt insbesondere an den Rotor 9 an. Auf dem Rotor 9 ist radial außenseitig das als Axiallaufrad ausgebildete Kühllaufrad 7 befestigt, dessen Laufradschaufein 8 in radialer Richtung vorstehen und gegenüber einer axialen Mittelinie ML geneigt verlaufen.

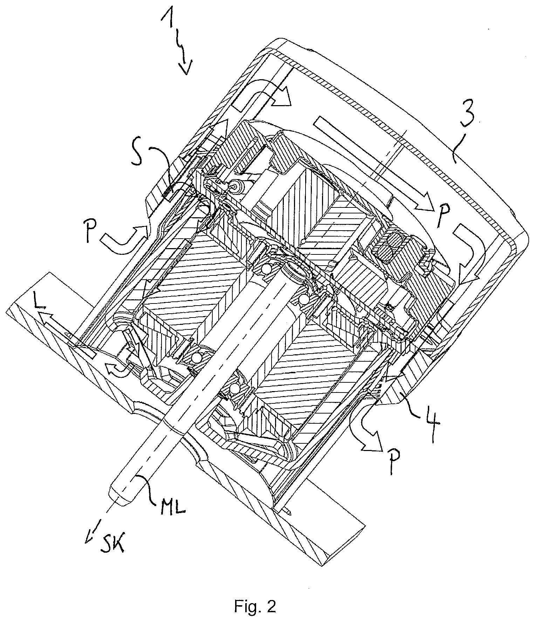

Über die Rotation des Rotors 9 und des Kühllaufrads 7 im Betrieb des Elektromotors 2 werden die in Figur 2 durch die Pfeile P und S gekennzeichneten Kühlluftströme erzeugt, wobei die Luft über die Ansaugöffnung 5 an der Gehäusewand 4 aus axialer Richtung, die der Schwerkraftrichtung SK entgegengesetzt ist, angesaugt wird. Im Inneren der Motoraufnahmevorrichtung 1 teilt sich der Luftstrom in einen den Elektromotor 2, insbesondere die Motorelektronik umströmenden Kühlluftstrom P und einen zwischen dem Rotor 9 und dem Stator geführten Kühlluftstrom L, der auch die Motorwicklungen kühlt. Der Kühlluftstrom P wird über eine auf derselben axialen Höhe der Ansaugöffnung 5 liegenden Ausblasöffnung 6 aus der Motoraufnahmevorrichtung 1 heraus geführt. Die Ausblasöffnung 6 und die Ansaugöffnung 5 weisen an der Gehäusewand 4 in die axiale Schwerkraftrichtung SK.

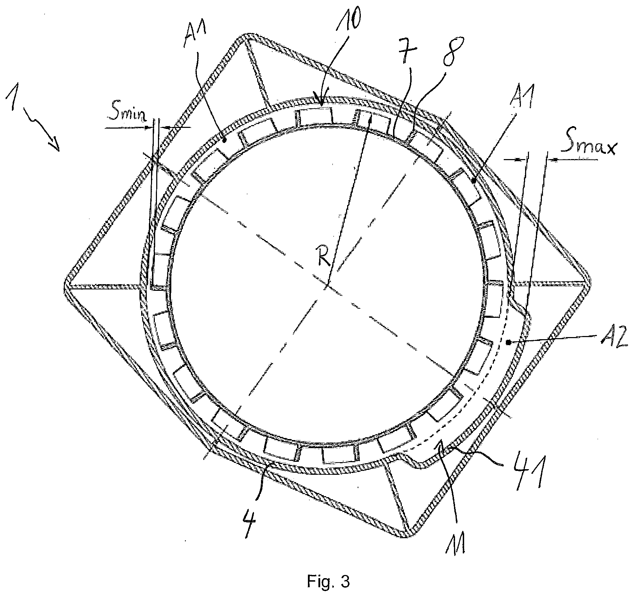

Bezugnehmend auf Figur 3 ist der Druckraum der Motoraufnahmevorrichtung 1 in einer axialen Draufsicht dargestellt. Die Gehäusewand 4 bildet einen umlaufenden Druckraum, der sich in radialer Richtung an das Kühllaufrad 7 des Elektromotors 2 anschließt. Der Druckraum ist in der axialen Draufsicht gemäß Figur 3 dadurch asymmetrisch ausgebildet, dass an der den Druckraum begrenzenden Gehäusewand 4 mindestens eine in Umfangsrichtung lokal beschränkte radiale Ausbuchtung 41 ausgebildet ist. Die Ausbuchtung 41 erstreckt sich in Umfangsrichtung über 40 GRAD und weist eine axiale Höhe auf, die der axialen Höhe des Kühllaufrads 7 entspricht. Die Ausblasöffnung 6 ist im Bereich der radialen Ausbuchtung 41 angeordnet. Die Ansaugöffnung 5 ist radial gegenüberliegend an der Gehäusewand 4 vorgesehen, in dem der durch die Gehäusewand 4 bestimmte Durchmesser geringer ist. Das Kühllaufrad 7 ist rotationssymmetrisch mit einem Durchmesser R ausgebildet. Die Motoraufnahmevorrichtung 1 ist doppelwandig, so dass die Formgebung von Außenwand und Innenwand unabhängig bleibt. Die Gehäusewand 4 bestimmt die Innenwand.

Der zwischen der Gehäusewand 4 und der durch die Laufradschaufeln 8 bestimmten radialen Stirnseite des Kühllaufrads 7 vorgesehene Kopfspalt 10 ist über 320 GRAD der Umfangsrichtung konstant und bildet dabei einen Nennkopfspalt, der geringer ist als ein maximaler Kopfspalt mit einer Größe Smax im Bereich der Aussparung 41. Der Nennkopfspalt entspricht in der gezeigten Ausführung einem minimalen Kopfspalt mit der Größe Smin, so dass Smin = Snenn. Ferner ist Smax um den Faktor 2,5 größer als Smin.

Eine Kopfspaltfläche A2 im Abschnitt der Aussparung 41 mit vergrößerten Kopfspalt 11 ist um den Faktor 1,5 größer als die durch den Kopfspalt 10 in der axialen Draufsicht zwischen den Laufradschaufeln 8 des Kühllaufrads 7 und der Gehäusewand 4 gebildeten Nennkopfspaltfläche A1.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können mehrere Ausbuchtungen in Umfangsrichtung vorgesehen werden, die jeweils eine Ausblasöffnung aufweisen.

## Patentansprüche

1. Motoraufnahmevorrichtung ausgebildet zur Aufnahme eines Elektromotors (2) mit einem in radialer Richtung zur Motoraufnahmevorrichtung (1) weisenden und von dem Elektromotor (2) antreibbaren Kühllaufrad (7), wobei die Motoraufnahmevorrichtung (1) eine Gehäusewand (4) mit einem umlaufenden Druckraum aufweist, der ausbildet ist, sich radial an das Kühllaufrad (7) des Elektromotors (2) anzuschließen, wobei der Druckraum in einer axialen Draufsicht asymmetrisch ausgebildet ist, und an der den Druckraum begrenzenden Gehäusewand (4) in Umfangsrichtung voneinander beabstandet eine Ansaugöffnung (5) und eine Ausblasöffnung (6) vorgesehen sind.

2. Motoraufnahmevorrichtung nach Anspruch 1, **dadurch gekennzeichnet, dass** die Ansaugöffnung (5) an der Gehäusewand (4) in einem Bereich geringeren Durchmessers ausgebildet ist als die Ausblasöffnung (6).

3. Motoraufnahmevorrichtung nach zumindest einem der vorigen Ansprüche, **dadurch gekennzeichnet, dass** an der den Druckraum begrenzenden Gehäusewand (4) mindestens eine in Umfangsrichtung lokal beschränkte radiale Ausbuchtung (41) ausgebildet ist.

4. Motoraufnahmevorrichtung nach Anspruch 3, **dadurch gekennzeichnet, dass** sich die radiale Ausbuchtung (41) in Umfangsrichtung über 20 - 60 GRAD erstreckt.

5. Motoraufnahmevorrichtung nach zumindest einem der vorigen Ansprüche 3 - 4, **dadurch gekennzeichnet, dass** die Ausblasöffnung (6) in der mindestens einen Ausbuchtung (41) und die Ansaugöffnung (5) in einem Bereich außerhalb der Ausbuchtung (41) ausgebildet sind.

6. Motoraufnahmevorrichtung nach zumindest einem der vorigen Ansprüche, **dadurch gekennzeichnet, dass** sie den Elektromotor (2) vollständig umkapselnd ausgebildet ist.

7. Motoraufnahmevorrichtung nach zumindest einem der vorigen Ansprüche, **dadurch gekennzeichnet, dass** der Druckraum eine Axialerstreckung aufweist, die größer oder gleich einer axialen Höhe des Kühllaufrads (7) ist.

8. Motoraufnahmevorrichtung nach zumindest einem der vorigen Ansprüche, **dadurch gekennzeichnet, dass** die Ansaugöffnung (5) oder sowohl die Ansaugöffnung (5) als auch die Ausblasöffnung (6) an der Gehäusewand (4) in axialer Richtung weisend ausgebildet sind.

9. Elektromotor aufgenommen in einer Motoraufnahmevorrichtung nach zumindest einem der vorigen Ansprüche, **dadurch gekennzeichnet, dass** zwischen der Gehäusewand (4) und einer radialen Stirnseite des Kühllaufrads (7) ein radialer Kopfspalt vorgesehen ist, dessen Größe entlang der Umfangsrichtung gesehen unkonstant ist.

10. Elektromotor aufgenommen in einer Motoraufnahmevorrichtung nach dem vorigen Anspruch, **dadurch gekennzeichnet, dass** ein Verhältnis eines maximalen Kopfspalts Smax zu einem minimalen Kopfspalt Smin größer als 1,5 ist, so dass gilt Smax/Smin > 1,5.

11. Motoraufnahmevorrichtung nach zumindest einem der vorigen Ansprüche 9 bis 10, **dadurch gekennzeichnet, dass** der Kopfspalt (10) über einen Umfangsabschnitt konstant und dabei als Nennkopfspalt ausgebildet ist, der in einer axialen Draufsicht zwischen dem Kühllaufrad (7) und der Gehäusewand (4) eine Nennkopfspaltfläche A1 bildet.

12. Elektromotor aufgenommen in einer Motoraufnahmevorrichtung nach dem vorigen Anspruch, **dadurch gekennzeichnet, dass** wenigstens ein Abschnitt mit gegenüber dem Nennkopfspalt Snenn vergrößerten Kopfspalt (12) in einer axialen Draufsicht zwischen dem Kühllaufrad (7) und der Gehäusewand (4) eine Kopfspaltfläche A2 bildet, wobei gilt A2/A1 > 1,1.

13. Motoraufnahmevorrichtung nach zumindest einem der vorigen Ansprüche 9 bis 12, **dadurch gekennzeichnet, dass** die Ansaugöffnung (5) an der Gehäusewand (4) in axialer Richtung unmittelbar an das Kühllaufrad (7) angrenzend ausgebildet ist.

14. Motoraufnahmevorrichtung nach zumindest einem der vorigen Ansprüche 11 bis 13, **dadurch gekennzeichnet, dass** die Ausblasöffnung (5) in einem Bereich an der Gehäusewand (4) ausgebildet ist, in dem der Kopfspalt (12) größer ist als der Nennkopfspalt.

## Claims

1. Motor holder device designed to hold an electric motor (2) having a cooling rotor (7), which faces in the radial direction in relation to the motor holder device (1) and is drivable by the electric motor (2), wherein the motor holder device (1) comprises a housing wall (4) having a circumferential pressure chamber, which is designed to radially adjoin the cooling rotor (7) of the electric motor (2), wherein the pressure chamber is formed asymmetrically in an axial top view, and an intake opening (5) and an exhaust opening (6) are provided spaced apart from one another in the circumferential direction on the housing wall (4) delimiting the pressure chamber.

2. Motor holder device according to Claim 1, **characterized in that** the intake opening (5) is formed on the housing wall (4) in a region of smaller diameter than the exhaust opening (6).

3. Motor holder device according to at least one of the preceding claims, **characterized in that** at least one radial bulge (41), which is locally restricted in the circumferential direction, is formed on the housing wall (4) delimiting the pressure chamber.

4. Motor holder device according to Claim 3, **characterized in that** the radial bulge (41) extends in the circumferential direction over 20-60°.

5. Motor holder device according to at least one of preceding Claims 3-4, **characterized in that** the exhaust opening (6) is formed in the at least one bulge (41) and the intake opening (5) is formed in a region outside the bulge (41).

6. Motor holder device according to at least one of the preceding claims, **characterized in that** it is formed completely encapsulating the electric motor (2).

7. Motor holder device according to at least one of the preceding claims, **characterized in that** the pressure chamber has an axial extension which is greater than or equal to an axial height of the cooling rotor (7).

8. Motor holder device according to at least one of the preceding claims, **characterized in that** the intake opening (5) or both the intake opening (5) and the exhaust opening (6) are formed facing in the axial direction on the housing wall (4).

9. An electric motor held in a motor holder device according to at least one of the preceding claims, **characterized in that** a radial head gap, the dimension of which is non-constant viewed along the circumferential direction, is provided between the housing wall (4) and a radial end face of the cooling rotor (7).

10. The electric motor held in a motor holder device as claimed in the preceding claim, **characterized in that** a ratio of a maximum head gap Smax to a minimum head gap Smin is greater than 1.5, so that Smax/Smin > 1.5.

11. Motor holder device according to at least one of preceding Claims 9 to 10, **characterized in that** the head gap (10) is constant over a circumferential section and is formed in this case as a nominal head gap, which forms a nominal head gap area A1 between the cooling rotor (7) and the housing wall (4) in an axial top view.

12. The electric motor held in a motor holder device as claimed in the preceding claim, **characterized in that** at least one section having a head gap (12) enlarged in relation to the nominal head gap Snenn between the cooling rotor (7) and the housing wall (4) in an axial top view forms a head gap area A2, wherein A2/A1 >1.1.

13. Motor holder device according to at least one of preceding Claims 9 to 12, **characterized in that** the intake opening (5) is formed directly adjoining the cooling rotor (7) in the axial direction on the housing wall (4).

14. Motor holder device according to at least one of preceding Claims 11 to 13, **characterized in that** the exhaust opening (5) is formed in a region on the housing wall (4) in which the head gap (12) is larger than the nominal head gap.

## Revendications

1. Compartiment moteur réalisé pour la réception d'un moteur électrique (2) avec une roue de refroidissement (7) pouvant être entraînée par le moteur électrique (2) et pointant dans la direction radiale par rapport au compartiment moteur (1), dans lequel le compartiment moteur (1) présente une paroi de carter (4) avec une chambre de pression circonférentielle, qui est réalisée pour se raccorder radialement à la roue de refroidissement (7) du moteur électrique (2), dans lequel la chambre de pression est réalisée de manière asymétrique dans une vue de dessus axiale, et une ouverture d'aspiration (5) et une ouverture de soufflage (6) sont prévues espacées l'une de l'autre dans la direction circonférentielle au niveau de la paroi de carter (4) délimitant la chambre de pression.

2. Compartiment moteur selon la revendication 1, **caractérisé en ce que** l'ouverture d'aspiration (5) est réalisée au niveau de la paroi de carter (4) dans une zone de plus petit diamètre que l'ouverture de soufflage (6).

3. Compartiment moteur selon au moins l'une quelconque des revendications précédentes, **caractérisé en ce qu'**au moins un renflement (41) radial délimité localement dans la direction circonférentielle est réalisé au niveau de la paroi de carter (4) délimitant la chambre de pression.

4. Compartiment moteur selon la revendication 3, **caractérisé en ce que** le renflement (41) radial s'étend dans la direction circonférentielle sur 20 - 60 DEGRÉS.

5. Compartiment moteur selon au moins l'une quelconque des revendications précédentes 3-4, **caractérisé en ce que** l'ouverture de soufflage (6) est réalisée dans l'au moins un renflement (41) et l'ouverture d'aspiration (5) est réalisée dans une zone en dehors du renflement (41).

6. Compartiment moteur selon au moins l'une quelconque des revendications précédentes, **caractérisé en ce qu'**il est réalisé encapsulant entièrement le moteur électrique (2).

7. Compartiment moteur selon au moins l'une quelconque des revendications précédentes, **caractérisé en ce que** la chambre de pression présente une extension axiale, qui est supérieure ou égale à une hauteur axiale de la roue de refroidissement (7).

8. Compartiment moteur selon au moins l'une quelconque des revendications précédentes, **caractérisé en ce que** l'ouverture d'aspiration (5) ou aussi bien l'ouverture d'aspiration (5) que l'ouverture de soufflage (6) sont réalisées pointant dans la direction axiale au niveau de la paroi de carter (4).

9. Moteur électrique reçu dans un compartiment moteur selon au moins l'une quelconque des revendications précédentes, **caractérisé en ce qu'**une fente de tête radiale, dont la taille est irrégulière vu le long de la direction circonférentielle, est prévue entre la paroi de carter (4) et un côté frontal radial de la roue de refroidissement (7).

10. Moteur électrique reçu dans un compartiment moteur selon la revendication précédente, **caractérisé en ce qu'**un rapport d'une fente de tête maximum Smax par rapport à une fente de tête minimum Smin est supérieur à 1,5, de sorte que Smax/Smin > 1,5.

11. Compartiment moteur selon au moins l'une quelconque des revendications précédentes 9 à 10, **caractérisé en ce que** la fente de tête (10) est constante sur une section circonférentielle et est réalisée ce faisant en tant que fente de tête nominale, qui forme dans une vue de dessus axiale entre la roue de refroidissement (7) et la paroi de carter (4) une surface de fente de tête nominale A1.

12. Moteur électrique reçu dans un compartiment moteur selon la revendication précédente, **caractérisé en ce qu'**au moins une section avec fente de tête (12) agrandie par rapport à la fente de tête nominale Snenn forme dans une vue de dessus axiale entre la roue de refroidissement (7) et la paroi de carter (4) une surface de fente de tête A2, dans lequel A2/A1 > 1,1.

13. Compartiment moteur selon au moins l'une quelconque des revendications précédentes 9 à 12, **caractérisé en ce que** l'ouverture d'aspiration (5) est réalisée au niveau de la paroi de carter (4) de manière directement adjacente à la roue de refroidissement (7) dans la direction axiale.

14. Compartiment moteur selon au moins l'une quelconque des revendications précédentes 11 à 13, **caractérisé en ce que** l'ouverture de soufflage (5) est réalisée dans une zone au niveau de la paroi de carter (4), dans laquelle la fente de tête (12) est plus grande que la fente de tête nominale.
